# EUROPÄISCHE PATENTSCHRIFT

(11) **EP 0 394 241 B1**
(45) Veröffentlichungstag und Bekanntmachung des Hinweises auf die Patenterteilung: **03.02.1993**
(21) Anmeldenummer: 88904929.2
(22) Anmeldetag: 14.06.1988
(51) Int. Cl.: G11B 15/66, G11B 15/665, G11B 15/61

(54) **POSITIONIERVORRICHTUNG FÜR MAGNETBÄNDER**
POSITIONING DEVICE FOR MAGNETIC TAPES
DISPOSITIF DE POSITIONNEMENT DE BANDES MAGNETIQUES

(30) Priorität: 03.07.1987 DE 3722051
(43) Veröffentlichungstag der Anmeldung: 31.10.1990
(73) Patentinhaber: ROBERT BOSCH GMBH, 70442 Stuttgart (DE)
(72) Erfinder: AEBISCHER, Claude, CH-1009 Pully (CH); DUVOISIN, Marc-Henri, CH-1028 Preverenges (CH); HEIZMANN, Frieder, CH-1110 Denens (CH); JEANNIN, Pierre, CH-1110 Morges (CH)
(86) Internationale Anmeldenummer: DE8800361
(87) Internationale Veröffentlichungsnummer: WO8900328

(56) Entgegenhaltungen:
- EP-A- 0 074 148
- EP-A- 0 074 149
- DE-A- 3 043 041
- DE-A- 3 701 159
- FR-A- 2 013 052
- US-A- 3 583 656
- US-A- 3 979 772
- US-A- 4 060 840
- US-A- 4 138 699

## Beschreibung

### Stand der Technik

Die Erfindung betrifft eine Vorrichtung zur Positionierung eines Magnetbands an einen Abtastkopf mittels Führungsstiften und/oder Führungsrollen.

Bei Magnetband-Aufzeichnungs- und Wiedergabegeräten ist es in zahlreichen Fällen erforderlich, das Magnetband aus einer Ruhelage abzuziehen und einem Abtastkopf (Scanner) zuzuführen, den es in der Betriebslage teilweise umschlingt. Das Magnetband kann in einer Kassette angeordnet sein, aber auch frei zwischen zwei üblichen Wickelspulen laufen, wobei die Wickelspulen vorzugsweise in einer Ebene angeordnet sind.

Die Transportgeschwindigkeit des Magnetbands ist häufig nur relativ gering. Da für die auf das Magnetband übertragbare und von diesem wieder abrufbare Informationsdichte jedoch nicht die Transportgeschwindigkeit des Magnetbands die entscheidende Große ist, sondern die Relativgeschwindigkeit zwischen dem Magnetband und dem Abtastkopf, wird für höhere Informationsdichten die Relativgeschwindigkeit dadurch erhöht, daß sich der Abtastkopf mit hoher Geschwindigkeit in oder entgegen der Transportrichtung des Magnetbands dreht. Dabei ist eine besonders exakte Positionierung des Magnetbands erforderlich, damit dieses in einer genau definierten Lage den Abtastkopf zumindest teilweise umschlingt.

Bei bekannten Positionierungvorrichtung für Magnetbänder, etwa bei Videorecordern, sind hierzu Führungsstifte und/oder Führungsrollen vorgesehen, die eine Translationsbewegung ausführen, um das Magnetband an den Abtastkopf zu bringen; eine derartige Vorrichtung wird beispielsweise bei VHS-Videorecordern verwendet. Weiterhin ist es beispielsweise von 8 mm-Videogeräten bekannt, die Bandpositionierung mit einem Führungsstift und einer Führungsrolle auf einem drehbar angeordneten Zahnkranz vorzunehmen. Bei einer Vorrichtung, die eine Translationsbewegung ausführt, ist die Ausführung der Bewegung sowie die erforderliche Präzision nur mit hohem apparativem Aufwand erreichbar. Dies liegt unter anderem an den Toleranzen der Bauteile, mit Hilfe derer die Translationsbewegung ausgeführt wird, und diese Toleranzen müssen geeignet kompensiert werden, um den außerordentlich engen Toleranzbereich einzuhalten, der für die Positionierung des Magnetbands an dem Abtastkopf vorgegeben ist. Ähnliche Schwierigkeiten ergeben sich bei dem bekannten Zahnkranz; auch hier ist eine annähernd spielfreie Anordnung nur mit hohem Aufwand erreichbar.

Aus der EP-A 74 149 ist eine Vorrichtung zur Positionierung eines Magnetbandes bekanntgeworden, bei der drehbare Hebel das Magnetband hintergreifen und durch eine Drehbewegung das Magnetband in eine Betriebslage ziehen, in welcher das Magnetband den Abtastkopf zumindest teilweise umschlingt. Zur Beendigung der Drehbewegungen sind Begrenzungen vorgesehen.

### Vorteile der Erfindung

Die erfindungsgemäße Vorrichtung mit einer Justiervorrichtung des Anschlags hat den Vorteil, daß sich die Endlage, also die Betriebslage, des Hebels sehr präzise festlegen läßt, wobei gleichzeitig Fertigungstoleranzen der verschiedenen Bauelemente auszugleichen sind. Der Anschlag einschließlich Justiervorrichtung ist bevorzugt rotationssymmetrisch ausgebildet. Eine besonders einfache, genaue Ausführungsform der Justiervorrichtung ..... weist eine als Schiebe ausgebildete Justiervorrichtung auf, die mit einer am Außenumfang angeordneten, umlaufenden Nut versehen ist, die sich radial nach innen verengt, wobei der Eingriffsteil eine flache Scheibe ist, die vorteilhafterweise am Umfang abgerundet ist. Beim Anschlag der flachen Scheibe an die mit einer Nut versehenen Scheibe läuft daher die flache Scheibe in die Nut ein und wird durch die Verengung sicher in die Endlage gebracht. Hierzu ist die Verengung der Nut vorteilhafterweise V-förmig; eine sich V-förmig verengende Nut ist besonders einfach herzustellen und legt die Endlage sicher fest. Vorteilhafterweise ist die flache Scheibe axial mit der Führungsrolle fluchtend am Hebel angeordnet, so daß die flache Scheibe und die Führungsrolle zusammen in einer einzigen Führungsvorrichtung, beispielsweise einer Achse, hochgenau geführt werden können.

Bei einem einzigen Hebel zur Positionierung des Magnetbands muß, um eine genügende Umschlingung des Abtastkopfs durch das Magnetband sicherzustellen, der Hebel einen relativ weiten Drehweg zurücklegen. Daher ist bei einer besonders vorteilhaften Ausführungsform der Erfindung ein zweiter Hebel mit Lager, Führungsrolle und Führungsstift vorgesehen, der so angeordnet ist, daß die beiden Hebel eine gegenläufige, gleichsinnige Bewegung ausführen, um das Magnetband von seiner Ruhelage in die Betriebslage am Abtastkopf zu bringen. Dies kann auf einfache Weise beispielsweise durch netsprechende Eingriffmittel zwischen den beiden Hebeln erreicht werden, die die Bewegung des einen Hebels an die des anderen koppeln. Eine derartige Ausführungsform mit zwei Hebeln führt dazu, daß die gesamte Anordnung wenig Platz einnimmt, da jeder der Hebel nunmehr nur noch einen relativ kurzen Drehweg zurückzulegen hat. Die beiden Hebel können spiegelsymmetrisch zueinander ausgebildet und angeordnet sein. Der zweite Hebel ist vorteilhafterweise ebenso mit einem entsprechenden Anschlag und einer Justiervorrichtung versehen wie der erste Hebel, so daß die gleichen oder ähnliche Bauteile als Anschlag, Justiervorrichtung und dergleichen verwendet werden können wie beim ersten Hebel.

Da die Drehung der beiden Hebel verhältnismäßig klein ist, wird vorteilhafterweise als erstes und/oder zweites Lager ein Rillenkugellager verwendet, welches völlig spielfrei ist.

### Zeichnung

Die Erfindung wird nachstehend anhand eines zeichnerisch dargestellten Ausführungsbeispiels näher erläutert, aus welchem weitere Vorteile und Merkmale hervorgehen. Hierbei zeigt Figur 1 eine vorteilhafte Ausführungsform einer erfindungsgemäßen Positioniervorrichtung, Figur 2 zeigt einen Anschlag mit Justiervorrichtung und Figur 3 eine Seitenansicht eines Hebels mit Kugelgelenk und Führungsrolle sowie zugeordnetem Eingriffsteil.

### Beschreibung des Ausführungsbeispiels

Bei dem Ausführungsbeispiel handelt es sich um eine Positioniervorrichtung für ein in einer Kassette angeordnetes Magnetband, welches aus seiner Ruhelage in der Kassette gezogen und dem Abtastkopf des Magnetbandgeräts zugeführt werden muß, so daß dieser teilweise von dem Magnetband umschlungen wird.

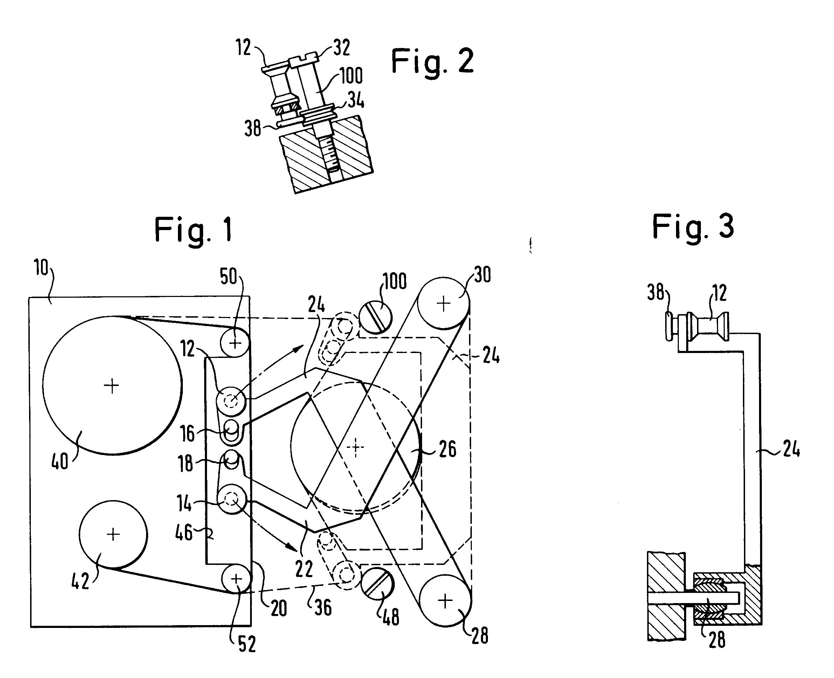

In Figur 1 sind die für das Verständnis der vorliegenden Erfindung wesentlichen Teile eines Kassetten-Magnetbandgeräts in Aufsicht, teilweise im Schnitt, dargestellt. In einer Magnetband-Kassette 10 ist ein Magnetband, dessen Ruhelage durch die Bezugsziffer 20 angegeben ist, angeordnet. Das Magnetband läuft von einer Abwickelspule 40 über einen Umlenkstift 50 über eine zur Vorderseite der Magnetbandkassette 10 hin offene Aussparung 46 zu einem zweiten Umlenkstift 52 und von dort auf eine Bandwickelspule 42. Die Transportgeschwindigkeit des Magnetbands zwischen den beiden Bandwickelspulen 40, 42 beträgt typischerweise 8,15 mm/s oder 4,075 mm/s.

Die Transportgeschwindigkeit wäre zu gering, um mit einem feststehenden Abtastkopf die beispielsweise für eine digitale Musikaufzeichnung benötigten Informationen auf dem Magnetband aufzuzeichnen und wieder abzutasten. Daher ist im Abstand zur Magnetbandkassette 10 ein rotierender Abtastkopf 26 angeordnet, der sich in der Transportrichtung des Magnetband mit hoher Geschwindigkeit dreht, so daß sich eine Relativgeschwindigkeit zwischen Magnetband und Abtastkopf von typischerweise 3,133 m/s ergibt oder bei der voranstehend angegebenen kleineren Transportgeschwindigkeit des Magnetbands die Hälfte. Zur Inbetriebsetzung des in Figur 1 dargestellten Magnetbandgeräts muß das Magnetband daher aus der Magnetbandkassette 10 herausgezogen und teilweise so um den Abtastkopf 26 geschlungen werden, wie es in Figur 1 mit gestrichelten Linien (Bezugsziffer 36) für die Betriebsposition des Magnetbands angedeutet ist.

Hierzu sind zwei Hebel 22, 24 mit jeweils in den Endabschnitten angeordneten Führungsrollen 14, 12 und Führungsstiften 18, 16 vorgesehen.

Im einzelnen ist ein erster Hebel 24 vorgesehen, dessen einer Endabschnitt in einem Lager 28 drehbeweglich geführt ist. Der Hebel 24 weist einen längeren Hauptabschnitt auf, der in ein Endstück ausläuft, auf welchem die Führungsrolle 12 und der Führungsstift 16 angeordnet sind.

Ein weiterer Hebel 22 ist vorgesehen, der ein Lager 30 umfaßt, das an einem Endabschnitt des Hebels 22 angeordnet ist, und der Hebel 22 ist mit einem längeren Hauptabschnitt versehen, der in einem Endabschnitt ausläuft, auf dem der Führungsstift 18 und die Führungsrolle 14 angeordnet sind.

Zum Inbetriebsetzen des Magnetbandgeräts wird die Magnetbandkassette 10 so abgesenkt, daß Führungsstift 18 und Führungsrolle 14 des Hebels 22 sowie, korrespondierend hierzu, Führungsstift 16 und Führungsrolle 12 des Hebels 24 in der freien Aussparung 46 der Magnetbandkassette 10 und damit hinter dem Magnetband (Ruhelage 20) zu liegen kommen. Bei einer Drehbewegung der Hebel 24, 22 um das jeweils entsprechende Lager 28 beziehungsweise 30 in Richtung der gestrichelt dargestellten Pfeile wird daher das Magnetband aus der Ruhelage 20 heraus und gegen den rotierenden Abtastkopf 26 gezogen, so daß es diesen teilweise umschlingt. Das Magnetband ist dann in der gestrichelt dargestellten Betriebslage 36.

Der Führungsstift 16 und die Führungsrolle 12 sind mit hoher Genauigkeit auf dem Hebel 24 befestigt. Zur genaueren Positionierung des Hebels 24 und damit auch zur genauen Festlegung des Führungsstifts 16 und der Führungsrolle 12 im Raum in der Endlage ist ein Anschlag 100 vorgesehen. Der Anschlag 100 mit einer Anschlagscheibe 32 und einer Justierscheibe 34 ist im einzelnen in Figur 2 dargestellt. In der gestrichelt in Figur 1 dargestellten Endlage des Hebels 24 berührt, wie in Figur 2 gezeigt ist, die Führungsrolle 12 die Anschlagscheibe 32 und eine Eingriffsscheibe 38 die Justierscheibe 34. Dabei ist es von Vorteil, den Abstand zwischen Anschlagscheibe 32 und Justierscheibe 34 und entsprechend den Abstand zwischen Führungsrolle 12 und Eingriffsscheibe 38 möglichst groß zu wählen. Wie insbesondere aus Figur 2 deutlich wird, ist der Anschlag 100 als Schraube ausgeführt, in deren unterem Bereich die Scheibe 34 angeordnet ist, die eine entlang des Außenumfangs umlaufende, sich nach innen V-förmig verengende Nut aufweist. Zum Eingriff in diese Nut der Scheibe 34 ist eine flache Scheibe 38 ausgebildet, die axial unterhalb der Führungsrolle 12 des Hebels 24 angeordnet ist. Durch die V-förmige Nut der Justierscheibe 34 wird daher die Höhenlage der Eingriffsscheibe 38 und damit auch des Hebels 24, also auch der Führungsrolle 12 und des Führungsstifts 16, eingestellt, wobei sich, bedingt durch die Länge des Hebels 24 sowie durch die rotationssymmetrische Form der Anschlagscheibe 32 und der Justierscheibe 34, die Lage der Achsen der Führungsrolle 12 und des Führungsstifts 16 im Raum nicht unzulässig ändern. Da die Lagerstelle 28 des Hebels 24 ein praktisch spielfreies Kugelgelenk ist, kann einerseits die Justierung ohne Verbiegung des Hebels 24 durchgeführt werden und andererseits die Führungsrolle 12 an der Anschlagscheibe 32 anliegen und die Eingriffscheibe 38 an der Justierscheibe 34 zentriert werden, wodurch die Lage des Hebels 24 eindeutig und spielfrei im Raum bestimmt ist. Da der Justierweg verhältnismäßig klein ist, kann als Kugelgelenk ein Rillenkugellager verwendet werden, das völlig spielfrei ist.

Der Anschlag 48 für den anderen Hebel 22 ist korrespondierend zum Anschlag 100 ausgebildet und bestimmt daher die Lage des Hebels 22 und damit auch der Führungsrolle 14 und des Führungsstifts 18 eindeutig im Raum.

In Figur 3 ist eine Seitenansicht, teilweise im Schnitt, des Hebels 24 dargestellt. Deutlich ist das als Lager dienende Kugelgelenk 28 an einem Ende des Hebels erkennbar, welches eine Bewegung des Hebels 24 in sämtlichen Richtungen zuläßt. Im gegenüberliegenden Endabschnitt des Hebels 24 sind oben auf dem Hebel 24 die Führungsrolle 12 und unterhalb des Hebels 24 die Eingriffsscheibe 38 für die Justierung angeordnet.

Um trotz der Fertigungstoleranzen der mechanischen Teile eine korrekte Umschlingung des Magnetbands um den Abtastkopf 26 zu erreichen, genügt als Justierung eine Verschiebung der mit einer V-förmigen Nut versehenen Justierscheibe in axialer Richtung, was durch entsprechende Einstellung der Anschlagschraube 100 erreicht werden kann, da vor allem die Höhenlage der Führungsrolle 12 und des Führungsstifts 16 genau eingehalten werden muß. Die Justierung des anderen Anschlags 48 erfolgt sinngemäß und ist nicht in den Figuren dargestellt.

## Patentansprüche

1. Vorrichtung zur Positionierung eines Magnetbandes (20, 36) an einem Abtastkopf (26) mittels Führungsstiften (16) und/oder Führungsrollen (12) für das Magnetband (20, 36), die über zumindest einen Hebel (24) drehbeweglich in einem Lager (28) geführt sind, wobei die Führungsrollen (12) und/oder Führungsstifte (16) das Magnetband (20, 36) in dessen Ruhelage (20) hintergreifen und bei einer Drehbewegung des zumindest einen Hebels (24) um das Lager (28) das Magnetband in die Betriebslage (36) zieht, in welcher das Magnetband (20, 36) den Abtastkopf (26) teilweise umschlingt, wobei ein Anschlag (100) zur Begrenzung der Drehbewegung des Hebeis (24) in seiner Betriebslage vorgesehen ist, dadurch gekennzeichnet, daß der Anschlag mit einer Justiervorrichtung (34) versehen ist, die zum Eingriff mit einem am Hebel (24) angeordneten Eingriffsteil (38) ausgebildet ist.

2. Vorrichtung nach Anspruch 1, dadurch gekennzeichnet, daß der Hebel (24) länglich ausgebildet ist.

3. Vorrichtung nach Anspruch 1 oder 2, dadurch gekennzeichnet, daß der Anschlag (100) einschließlich der Justiervorrichtung (34) rotationssymmetrisch ausgebildet ist.

4. Vorrichtung nach Anspruch 3, dadurch gekennzeichnet, daß die Justiervorrichtung als Scheibe (34) ausgebildet ist, die eine am Außenumfang angeordnete, umlaufende Nut aufweist, die sich radial nach innen verengt, und daß der Eingriffsteil eine flache Scheibe (38) ist.

5. Vorrichtung nach Anspruch 4, dadurch gekennzeichnet, daß die Nut sich V-förmig verengend ausgebildet ist.

6. Vorrichtung nach einem der Ansprüche 4 oder 5, dadurch gekennzeichnet, daß die flache Scheibe (38) axial mit der Führungsrolle (12) fluchtend am Hebel (24) angeordnet ist.

7. Vorrichtung nach einem der Ansprüche 4 bis 6, dadurch gekennzeichnet, daß die flache Scheibe (38) am Umfang abgerundet ist.

8. Vorrichtung nach einem der vorhergehenden Ansprüche, dadurch gekennzeichnet, daß ein zweiter Hebel (22) mit Lager (30), Führungsrolle (14) und/oder Führungsstift (18) vorgesehen und so angeordnet ist, daß die beiden Hebel (24, 22) eine gegenläufige, gleichsinnige Bewegung ausführen, um das Magnetband von seiner Ruhelage (20) in die Betriebslage (36) am Abtastkopf (26) zu bringen.

9. Vorrichtung nach einem der vorhergehenden Ansprüche, dadurch gekennzeichnet, daß das erste und/oder zweite Lager (28, 30) ein Rillenkugellager ist.

## Claims

1. Device for positioning a magnetic tape (20, 36) on a scanning head (26) by means of guide pins (16) and/or guide rollers (12) for the magnetic tape (20, 36), which are guided pivotally movably in a bearing (28) by means of at least one lever (24), the guide rollers (12) and/or guide pins (16) engaging behind the magnetic tape (20, 36) in its position of rest (20) and, upon a pivotal motion of the at least one lever (24) about the bearing (28), drawing the magnetic tape into the operating position (36), in which the magnetic tape (20, 36) wraps partly around the scanning head (26), a stop (100) being provided for limiting the pivotal motion of the lever (24) in its operating position, characterised in that the stop is provided with an adjusting device (34), which is designed for engagement with an engaging part (38) arranged on the lever (24).

2. Device according to claim 1, characterised in that the lever (24) is of an elongated design.

3. Device according to claim 1 or 2, characterised in that the stop (100), including the adjusting device (34), is of a rotationally symmetrical design.

4. Device according to claim 3, characterised in that the adjusting device is designed as a disc (34) which has a peripheral groove which is arranged on the outer circumference and narrows radially inwards, and in that the engaging part is a flat disc (38).

5. Device according to claim 4, characterised in that the groove is of a design narrowing in the shape of a V.

6. Device according to one of claims 4 or 5, characterised in that the flat disc (38) is arranged on the lever (24) in axial alignment with the guide roller (12).

7. Device according to one of claims 4 to 6, characterised in that the flat disc (38) is rounded off at the circumference.

8. Device according to one of the preceding claims, characterised in that a second lever (22), with bearing (30), guide roller (14) and/or guide pin (18), is provided and is arranged in such a way that the two levers (24, 22) execute a counter-running, same-sense motion in order to bring the magnetic tape from its position of rest (20) into the operating position (36) on the scanning head (26).

9. Device according to one of the preceding claims, characterised in that the first and/or second bearing (28, 30) is a grooved ball bearing.

## Revendications

1. Dispositif de positionnement d'une bande magnétique (20, 36) sur une tête de lecture (26) à l'aide de tiges de guidage (16) et/ou de galets de guidage (12) de la bande magnétique (20, 36) qui sont guidés par au moins un levier (24) mobile en rotation dans un palier (28), les galets de guidage (12) et/ou les tiges de guidage (16) Venant prendre derrière la bande magnétique (20, 36) lorsque celle-ci est en position de repos (20) et la tirer en position de fonctionnement (36) par un mouvement de rotation d'au moins un levier (24) autour du palier (28), position de fonctionnement (36) dans laquelle la bande magnétique (20, 36) entoure partiellement la tête de lecture (26), une butée (100) étant prévue pour limiter le mouvement de rotation du levier (24) dans sa position de fonctionnement, dispositif caractérisé en ce que la butée comporte un dispositif d'ajustage (34) conçu pour coopérer avec une pièce de prise (38) prévue sur le levier (24).

2. Dispositif selon la revendication 1, caractérisé en ce que le levier (24) est allongé.

3. Dispositif selon la revendication 1 ou 2, caractérisé en ce que la butée (100), y compris le dispositif d'ajustage (34), sont réalisés avec une symétrie de rotation.

4. Dispositif selon la revendication 3, caractérisé en ce que le dispositif d'ajustage est en forme de disque (34) comportant une rainure périphérique à sa périphérie extérieure, cette rainure allant en diminuant radialement vers l'intérieur et la pièce de prise est un disque plat ((38).

5. Dispositif selon la revendication 4, caractérisé en ce que la rainure va en se rétrécissant en forme de V.

6. Dispositif selon l'une des revendications 4 ou 5, caractérisé en ce que le disque plat (38) est monté aligné sur le levier (24), axialement avec le galet de guidage (12).

7. Dispositif selon l'une des revendications 4 à 6, caractérisé en ce que le disque plat (38) a une périphérie arrondie.

8. Dispositif selon l'une des revendications précédentes, caractérisé par un second levier (22) avec un palier (30), un galet de guidage (14) et/ou une tige de guidage (18), montés de manière que les deux leviers (24, 22) exécutent un mouvement de même sens, antagoniste pour faire passer la bande magnétique de sa position de repos (20) à sa position de fonctionnement (36) sur la tête de lecture (26).

9. Dispositif selon l'une des revendications précédentes, caractérisé en ce que le premier et/ou le second palier (28, 30) est un palier à billes à rainures.
